# EUROPEAN PATENT APPLICATION

(11) **EP 4 552 882 A1**
(43) Date of publication of application: **14.05.2025**
(21) Application number: 23876226.4
(22) Date of filing: 27.06.2023
(51) Int. Cl.: B60K 1/04, B60L 50/64, H01M 50/204

(54) **BATTERY FRAME, POWER BATTERY, AND VEHICLE**

(30) Priority: 13.10.2022 CN 202211258098
(71) Applicant: ZHEJIANG ZEEKR INTELLIGENT TECHNOLOGY CO., LTD., 315000 Ningbo Zhejiang (CN); Zhejiang Geely Holding Group Co., Ltd., Hangzhou, Zhejiang 310000 (CN)
(72) Inventor: LIU, Qun, Ningbo, Zhejiang 315000 (CN); DUAN, Zhixiang, Ningbo, Zhejiang 315000 (CN); GOU, Tao, Ningbo, Zhejiang 315000 (CN); DUAN, Yanyan, Ningbo, Zhejiang 315000 (CN); ZHOU, Jinbo, Ningbo, Zhejiang 315000 (CN); MAO, Yun, Ningbo, Zhejiang 315000 (CN); WANG, Bing, Ningbo, Zhejiang 315000 (CN)
(74) Representative: Osterhoff, Utz
(86) International application number: PCT/CN2023/102902
(87) International publication number: WO 2024/078016

(57) **Abstract**

Disclosed are a battery frame, a power battery and a vehicle. The battery frame includes a base plate and side beams. The side beams are provided on opposite sides of the base plate, each side beam includes a side beam part, a connecting part provided inside the side beam part and connected to the base plate, and a fixing part provided outside the side beam part and configured to connect to a door sill beam of a vehicle. The side beam part includes a upper side beam and a lower side beam, the upper side beam is provided above the lower side beam, an outer side of the lower side beam is connected to the fixing part, and an inner side of the lower side beam is connected to the connecting part, and a first cavity is provided at the lower side beam. The bottom wall of the first cavity at the lower part of the side beam is thinned, and the thickness of the bottom wall of the first cavity is less than the thickness of the side wall of the first cavity.

## Description

### CROSS-REFERENCE TO RELATED APPLICATIONS

This application claims priority to Chinese Patent Application No. 202211258098.1, filed on October 13, 2022, the entire contents of which are incorporated herein by reference.

### TECHNICAL FIELD

The present application relates to the technical field of power batteries, and in particular to a battery frame, a power battery and a vehicle.

### BACKGROUND

The power battery of a pure electric vehicle is usually provided under the floor of the vehicle body, and between the front and rear subframes. The front and rear parts of the battery are protected by the subframe, so the damage to the power battery by the front and rear collisions is relatively small. The side is only protected by the door sill beam and the battery's own side beam, so the side collision is more likely to cause a greater impact on the battery. In order to avoid the side beam from hitting the battery during a side collision, a space distance will be reserved between the battery cell and the side beam to reduce the risk of hitting the battery cell during a side collision.

However, in order to alleviate the anxiety of electric vehicle owners, major car companies are now working hard to increase the battery power. Among them, expanding the battery cell boundary to increase the battery power is an effective solution, but limited by the influence of the vehicle width, expanding the battery cell boundary will further shorten the distance from the vehicle boundary to the battery cell, increasing the risk of hitting the battery cell during a side collision.

At present, the above problems are generally solved by strengthening the door sill beam and the battery side beam. Although strengthening the structural strength of the door sill beam and the battery side beam can protect the battery cell to a certain extent, on the one hand, it increases the weight of the vehicle and the battery frame, which does not meet the requirements of lightweight design; on the other hand, the problem of hitting the battery cell during a side collision still exists and has not been well solved.

### SUMMARY

The main purpose of the application is to provide a battery frame, aiming to increase the cell capacity of the power battery pack while ensuring the safety of the cell during a side collision.

To achieve the above purpose, the present application provides a battery frame, including: a base plate and side beams. The side beams are provided on opposite sides of the base plate, each side beam includes a side beam part extending along a height direction of the base plate, a connecting part provided inside the side beam part and connected to the base plate, and a fixing part provided outside the side beam part and connected to a door sill beam of a vehicle. The side beam part includes an upper side beam and a lower side beam, the upper side beam is provided above the lower side beam, an outer side of the lower side beam is connected to the fixing part, an inner side of the lower side beam is connected to the connecting part, a first cavity is provided at the lower side beam, and a thickness of a bottom wall of the first cavity is less than a thickness of a side wall of the first cavity.

In an embodiment, the battery frame further includes a scratch protection plate, the bottom wall of the first cavity is provided with a mounting position, and the scratch protection plate is detachably fixed to the mounting position.

In an embodiment, the scratch protection plate is fixed to the mounting position by a fastener, the mounting position forms a groove along a penetration direction of the fastener, and a head of the fastener is placed in the groove.

In an embodiment, the connecting part is provided with a second cavity.

In an embodiment, a thickness of a wall of the second cavity is greater than or equal to the thickness of the side wall of the first cavity.

In an embodiment, a third cavity is provided on the upper side beam, and a reinforcement structure is provided in the third cavity.

In an embodiment, the reinforcement structure includes a plurality of reinforcement ribs distributed inside the third cavity, the plurality of reinforcement ribs are obliquely provided between two side walls of the third cavity, and the third cavity is divided into a plurality of sub-cavities.

In an embodiment, a thickness of a side wall of the third cavity is less than the thickness of the side wall of the first cavity.

In an embodiment, a connection between the fixing part and the lower side beam is inclined.

In an embodiment, the fixing part includes a sink formed by a bottom depression, a fastener passes through the fixing part and is fixed to the door sill beam of the vehicle, and a head of the fastener is provided in the sink.

In an embodiment, the side beam is formed by an integral extrusion process.

The present application also provides a power battery, including: a cell module and the battery frame described in any of the above embodiments, the battery frame is configured to install the cell module.

In an embodiment, the power battery further includes a protective layer provided between the cell module and the battery frame.

The present application also provides a vehicle, including: a vehicle body and the power battery described in any of the above embodiments, the two fixing parts are respectively connected to a door sill beam of the vehicle body, and a cavity structure is provided in the door sill beam.

In an embodiment, the door sill beam is formed by an integral extrusion process.

In technical solutions of the present application, the battery frame includes a base plate and side beams, the side beams are provided at opposite sides of the base plate, and each side beam includes a side beam part extending along the height direction of the base plate, a connecting part provided inside the side beam part and connected to the base plate, and a fixing part provided outside the side beam part and configured to connect to a door sill beam of a vehicle. The side beam part includes an upper side beam and a lower side beam, the upper side beam is provided above lower side beam. The outer side of the lower side beam is connected to the fixing part, and the inner side of the lower side beam is connected to the connecting part. A first cavity is provided at lower side beam, the bottom wall of the first cavity at lower side beam is thinned, and the thickness of the bottom wall of the first cavity is less than the thickness of the side wall of the first cavity. The bottom wall of the first cavity at the bottom of the side beam is thinned so that the thickness of the bottom wall of the first cavity is less than the thickness of the side wall of the first cavity, and the structure of the side beam is changed. When deformed by collision, the side beam is bent at this thinned point, so that during the collision, the side beam will be squeezed and deformed in an oblique upward direction, avoiding direct squeezing in the direction of the battery cell when the connection position between the battery frame and the door sill beam collapses, thereby reducing the impact force. In particular, the battery frame is applied to an improved door sill beam of the vehicle of the present application, and the collision force can be weakened by the door sill beam, which can further ensure the safety of the battery cell during a side collision, and the protection effect is better.

### BRIEF DESCRIPTION OF THE DRAWINGS

In order to more clearly illustrate the embodiments of the present application or the technical solutions in the related art, the drawings required for use in the embodiments or the description of the related art will be briefly introduced below. Obviously, the drawings described below are only some embodiments of the present application. For those skilled in the art other drawings can be obtained based on the structures shown in these drawings without creative work.
FIG. 1 is a cross-sectional schematic view of a power battery installed on a door sill beam according to an embodiment of the present application.
FIG. 2 is a schematic view of a battery frame in FIG. 1.
FIG. 3 is a schematic view of a side beam in FIG. 1.
FIG. 4 is a schematic view of the door sill beam collapsing during a side collision in FIG. 1.
FIG. 5 is a schematic view of a collapse direction of the side beam in FIG. 4.

**Description of reference signs:**

| reference sign | name | reference sign | name |
|---|---|---|---|
| 100 | door sill beam | 360 | connecting part |
| 110 | cavity structure | 361 | second cavity |
| 200 | power battery | 370 | fixing part |
| 300 | battery frame | 371 | sink |
| 310 | base plate | 400 | cell module |
| 320 | side beam | 410 | battery cell group |
| 330 | side beam part | 420 | cooling assembly |
| 340 | upper side beam | 421 | liquid cooling plate |
| 341 | third cavity | 422 | water pipe |
| 342 | reinforcing rib | 500 | protective layer |
| 350 | lower side beam | 600 | scratch protection plate |
| 351 | first cavity | 700 | battery cover |
| 352 | mounting position | 800 | fastener |
| 353 | bottom wall | | |

The realization of the objective, functional characteristics, and advantages of the present application are further described with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that if there is a directional indication (such as up, down, left, right, front, rear) in the embodiments of the present application, the directional indication is only configured to explain the relative positional relationship, movement, etc. of the components in a certain posture (as shown in the drawings). If the specific posture changes, the directional indication will change accordingly.

Besides, the descriptions associated with, e.g., "first" and "second" in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. The meaning of "and/or" appearing in the present application includes three parallel scenarios. In addition, the technical solutions between the various embodiments can be combined with each other, but they must be based on the realization of those skilled in the art. When the combination of technical solutions is contradictory or cannot be achieved, it should be considered that such a combination of technical solutions does not exist, nor is it within the scope of the present application.

The power battery of a pure electric vehicle is usually provided under the floor of the vehicle body, and between the front and rear subframes. The front and rear parts of the battery are protected by the subframe, so the damage to the power battery by the front and rear collisions is relatively small. The side is only protected by the door sill beam and the battery's own side beam, so the side collision is more likely to cause a greater impact on the battery. In order to avoid the side beam from hitting the battery during a side collision, a space distance will be reserved between the battery cell and the side beam to reduce the risk of hitting the battery cell during a side collision.

However, in order to alleviate the anxiety of electric vehicle owners, major car companies are now working hard to increase the battery power. Among them, expanding the battery cell boundary to increase the battery power is an effective solution, but limited by the influence of the vehicle width, expanding the battery cell boundary will further shorten the distance from the vehicle boundary to the battery cell, increasing the risk of hitting the battery cell during a side collision.

At present, the above problems are generally solved by strengthening the door sill beam and the battery side beam. Although strengthening the structural strength of the door sill beam and the battery side beam can protect the battery cell to a certain extent, on the one hand, it increases the weight of the vehicle and the battery frame, which does not meet the requirements of lightweight design; on the other hand, the problem of hitting the battery cell during a side collision still exists and has not been well solved.

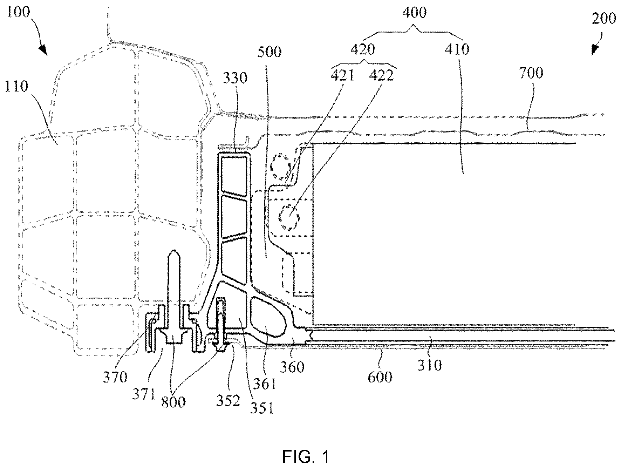

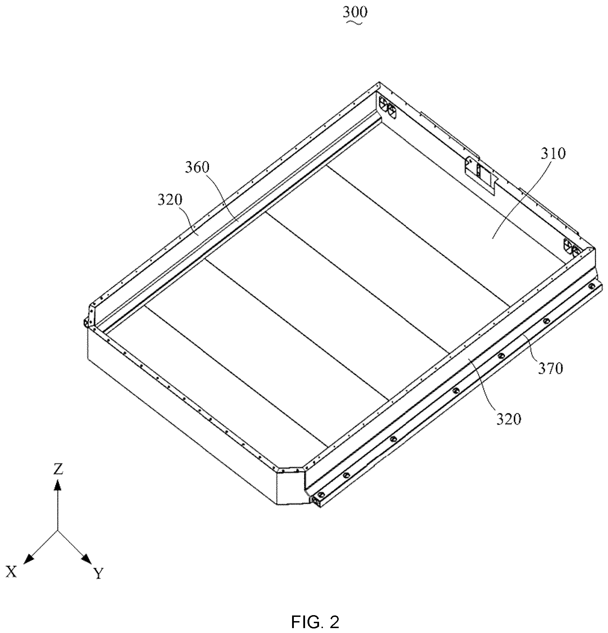

As shown in FIG. 1 to FIG. 3, the present application provides a vehicle. The power battery 200 of the vehicle is installed under the floor of the vehicle body. The power battery 200 is connected to the door sill beam 100 of the vehicle. When the vehicle experiences a side collision, the collision force first hits the door sill beam 100, and the door sill beam 100 absorbs part of the energy during the collision. Part of the remaining energy is transferred to other areas of the vehicle body through the horizontal seat crossbeam on the floor of the vehicle body. The other part of the remaining energy is mainly transferred to the frame at the bottom of the battery through the side beam 320 of the battery frame 300, and then transferred to the vehicle body structure on another side.

As shown in FIG. 1, in order to reduce the impact force during the side collision process and ensure lightweight, in an embodiment, the door sill beam 100 is an aluminum extruded beam, that is, the door sill beam 100 is formed by an integrated aluminum extrusion process. The interior of the door sill beam 100 is a cavity structure 110, similar to a plurality of space structures, for example, a space structure in a nine-square format. The plurality of space structures ensure the absorption of the collision force, and when the door sill beam 100 is crushed and deformed during the collision, the side collision force can be reduced.

As shown in FIG. 1 to FIG. 3, the present application further provides a power battery 200 including a cell module 400 and a battery frame 300 on which the cell module 400 is installed. The battery frame 300 includes a base plate of front and rear side beams and two side beams 320. The cell module 400 is provided in the battery frame 300. The cell module 400 includes a cell group 410 and a cooling assembly 420. The cooling assembly 420 includes a liquid cooling plate 421 and a water pipe 422. The cooling assembly 420 is provided between the cell group 410 and the battery frame 300. The collision requirements of the power battery 200 are as follows: the deformation of the battery frame 300 cannot touch the cell group 410, causing the cell group 410 to deform, nor can it touch the cooling assembly 420 inside the battery frame 300, and the coolant in the cooling assembly 420 cannot flow out.

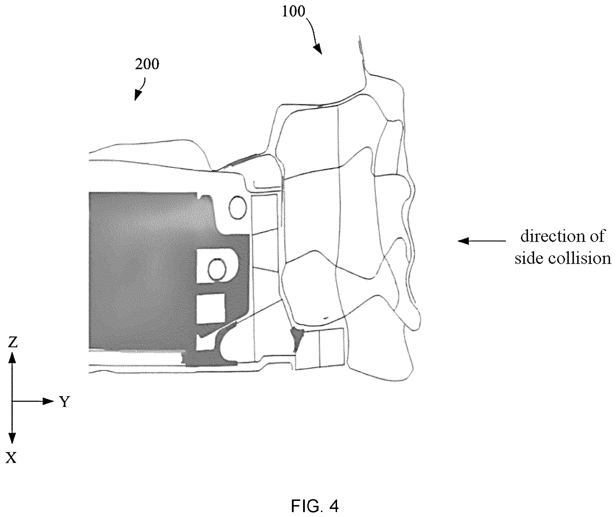

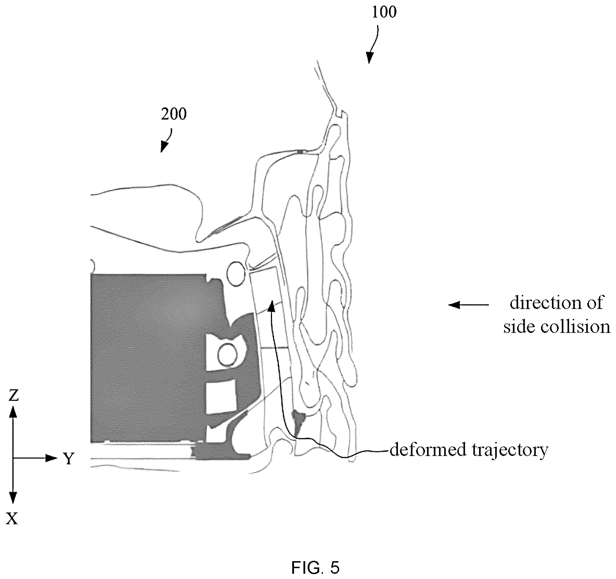

As shown in FIG. 4 and FIG. 5, the present application further improves the battery frame 300 to increase the cell capacity of the power battery 200 while ensuring the safety during a side collision. In an embodiment, the battery frame 300 includes a base plate 310 and side beams 320 provided on both sides of the base plate 310. Each side beam 320 includes a side beam part 330 extending along the height direction of the base plate 310, a connecting part 360 provided inside the side beam part 330 and connected to the base plate 310, and a fixing part 370 provided outside the side beam part 330 and connected to a door sill beam 100 of the vehicle. In order to increase the cell capacity of the power battery 200 and ensure the safety of the cell during a side collision, the side beam part 330 includes an upper side beam 340 and a lower side beam 350. The upper side beam 340 is provided above the lower side beam 350. The outer side of the lower side beam 350 is connected to the fixing part 370 and the inner side of the lower side beam 350 is connected to the connecting part 360. The lower side beam 350 is provided with a first cavity 351. The bottom wall 353 of the first cavity 351 of the lower side beam 350 is thinned so that the thickness of the bottom wall 353 of the first cavity 351 is less than the thickness of the side wall of the first cavity 351. The structure of the side beam 320 is changed. When deformed by collision, the side beam 320 is bent at the thinned part, so that the side beam 320 is bent in an oblique upward direction toward the battery frame 300 during the collision, avoiding direct squeezing toward the battery cell when the connection position between the battery frame 300 and the door sill beam 100 collapses, thereby reducing the impact force. In particular, the door sill beams 100 of the vehicle cooperate to weaken the collision force after the improvement described above, further ensuring the safety of the battery cell during side collision.

The technical solution of the present application adopts a base plate 310 and a side beam 320, the side beam 320 is provided at two opposite sides of the base plate 310, and the side beam 320 includes a side beam part 330 extending along the height direction of the base plate 310, a connecting part 360 provided inside the side beam part 330 and connected to the base plate 310, and a fixing part 370 provided outside the side beam part 330 and connected to the door sill beam of the vehicle 100. The side beam part 330 includes an upper side beam 340 and a lower side beam 350, the upper side beam 340 is provided above the lower side beam 350. The outer side of the lower side beam 350 is connected to the fixing part 370, and the inner side of the lower side beam 350 is connected to the connecting part 360. The lower side beam 350 is provided with a first cavity 351, and a bottom wall 353 of the first cavity 351 of the lower side beam 350 is thinned, and the thickness of the bottom wall 353 of the first cavity 351 is less than the thickness of the side wall of the first cavity 351. The bottom wall 353 of the first cavity 351 of the lower side beam 350 is thinned so that the thickness of the bottom wall 353 of the first cavity 351 is less than the thickness of the side wall of the first cavity 351, and the structure of the side beam 320 is changed. When deformed by collision, the side beam 320 is bent at the thinned part, so that the side beam 320 is bent in an oblique upward direction toward the battery frame 300 during the collision, avoiding direct squeezing toward the battery cell when the connection position between the battery frame 300 and the door sill beam 100 collapses, thereby reducing the impact force. In particular, the door sill beams 100 of the vehicle cooperate to weaken the collision force after the improvement described above, further ensuring the safety of the battery cell during side collision.

The side beam 320 is deformed at the thinned part at the bottom of the side beam 320. During the side collision, the bottom of the side beam 320 begins to deform, so that the side beam 320 moves in an oblique upward direction, reducing the impact force on the battery cell. By changing the deformation direction of the side beam 320, the capacity of the cell group 410 in the battery frame 300 can be increased by expanding the battery cell boundary.

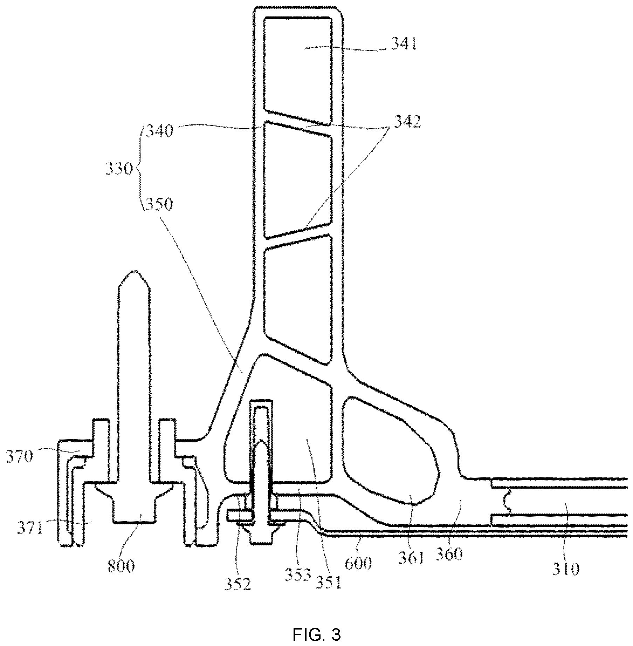

As shown in FIG. 1 and FIG. 3, in order to reduce the mass of the battery frame 300 to achieve a light weight design, the connecting part 360 is provided with a second cavity 361.

In order to increase the capacity of the battery cell of the power battery 200 and ensuring safety during a side collision, the thickness of the wall of the second cavity 361 is greater than or equal to the thickness of the side wall of the first cavity 351. As described above, during a collision, a part of the energy will be transferred from the side beam 320 to the frame at the bottom of the battery, and then transferred to the vehicle body structure on another side. By strengthening the strength of the connection with the base plate 310, the impact force can be better transmitted and the deformation effect can also be ensured. The second cavity 361 is provided in the connecting part 360 to strengthen the connection between the side beam 320 of the battery and the base plate 310. The base plate 310 is fixed to the connecting part 360 by welding. The thickness of the wall of the transverse structure of the second cavity 361 is greater than the thickness of the bottom wall 353 of the first cavity 351, ensuring that the side beam 320 is not easily deformed at this point. The collision force can be diffused to the frame of the base plate 310 of the battery frame 300 through the second cavity 361, thereby dispersing the collision force.

As shown in FIG. 1 and FIG. 3, in order to increase the capacity of the cell of the power battery 200 and ensuring safety during a side collision, the power battery 200 also includes a buffer material, and a protective layer 500 made of the buffer material is provided between the battery frame 300 and the cell. In the embodiment, the protective layer 500 is configured as a polyurethane filling layer. A liquid cooling plate 421 and a water pipe 422 for cooling are provided between the battery frame 300 and the cell group 410. The polyurethane filling layer wraps the liquid cooling plate 421 and the water pipe 422. In order to improve the cooling efficiency, a liquid cooling plate 421 is added between rows of cells to increase the cooling area of the cells. In addition, in order to increase the utilization rate of the internal space of the battery, the interface between the liquid cooling plate 421 and the water pipe 422 is provided between the side beam 320 and the cell. In order to protect the liquid cooling plate 421, polyurethane material is added. The polyurethane material is attached to the battery cell on one side and to the side beam on another side, and the middle is hollowed out to avoid the liquid cooling plate 421. When a collision occurs, the side beam 320 is deformed at the thinned part of the first cavity 351 of the lower side beam 350, so that the force area squeezed on the polyurethane material will also increase, minimizing the impact on the battery cell. The polyurethane material protects the liquid cooling plate 421. The polyurethane material can withstand an impact greater than 80Mpa, which can prevent the coolant of the liquid cooling plate 421 from flowing out when the power battery 200 is hit from the side.

As shown in FIG. 1 and FIG. 3, in order to protect the power battery 200, the battery frame 300 also includes a scratch protection plate 600, and the lower side beam 350 is provided with a mounting position 352, and the scratch protection plate 600 is detachably fixed to the mounting position 352. In order to facilitate replacement, in this embodiment, the scratch protection plate 600 is fixed to the mounting position 352 with bolts, and can be directly replaced after the battery is scratched. In an embodiment, other detachable connection methods can also be used, such as projection welding nuts, clamping, etc. The scratch protection plate 600 is fixed to the mounting position 352 by a fastener 800, and the mounting position 352 forms a groove along the penetration direction of the fastener, and the head of the fastener 800 is placed in the groove.

In an embodiment, the bottom wall 353 of the first cavity 351 is provided with a mounting position 352, and the groove at the mounting position 352 is formed by the bottom wall 353 itself being recessed in the direction of the fastener 800. The fastener 800 is inserted through the bottom wall 353 and placed in the first cavity 351, and the head of the fastener 800 is hidden by the groove. In this way, even if the bottom wall 353 is thinned, the fastener 800 fixing the scratch protection plate 600 can be prevented from being exposed, thereby ensuring the aesthetics and high-end feel.

In an embodiment, as shown in FIG. 1 and FIG. 3, the bottom wall 353 of the first cavity 351 is provided with a mounting position 352, and the groove at the mounting position 352 is formed by the right side wall of the fixing part 370, the bottom wall 353 and the left side wall of the connecting part 360. The design of the groove can prevent the head of the fastener 800 of the scratch protection plate 600 from being exposed, ensuring the aesthetics and high-end feel. Furthermore, the groove can also cause the side beam to deform here when a collision occurs, and in order to make deformation easier, the thickness of the bottom wall 353 at this point is also thinned compared to the surrounding side walls. It is ensured that the structure of the side beam 320 will not be directly squeezed in the direction of the battery cell during a collision. In the actual analysis process, after the deformation here, the side beam 320 will be squeezed and deformed obliquely upward, increasing the force area with the polyurethane material and reducing the impact on the cooling module and the battery cell.

As shown in FIG. 1 and FIG. 3, in order to reduce the mass of the battery frame 300 and to achieve a light weight design, a third cavity 341 is provided on the upper side beam 340. Furthermore, a reinforcement structure is provided in the third cavity 341 to separate the third cavity 341 to form a plurality of sub-cavities. The reinforcement structure includes a plurality of reinforcing ribs 342 distributed in the third cavity 341. The plurality of reinforcing ribs 342 are obliquely provided and supported between the two side walls of the third cavity 341. While increasing the structural strength, the plurality of sub-cavities formed by the inclined plurality of reinforcing ribs 342 are also convenient for collision collapse, and have a certain effect on buffering and energy absorption.

As shown in FIG. 1 and FIG. 3, in order to further reduce the weight of the battery frame 300, the force on the upper side beam 340 in the collision is smaller than that on the lower side beam 350. Therefore, the thickness of the wall of the third cavity 341 of the upper side beam 340 is smaller than the thickness of the side wall of the first cavity 351 of the lower side beam 350. In order to facilitate buffering deformation, the reinforcing ribs 342 of the third cavity 341 of the upper side beam 340 are also designed to be inclined. In this embodiment, two inclined reinforcing ribs 342 are provided in the third cavity 341, and the cross-section of the reinforcing ribs 342 and the side wall of the third cavity 341 is trapezoidal. In this way, while ensuring the collision effect, the thickness of the side beam 320 structure is minimized as much as possible to achieve the lightweight design requirements.

Furthermore, in order to ensure the stability of the connection between the fixing part 370 and the door sill beam 100 and to ensure the transmission of collision force during a collision, the connection between the fixing part 370 and the lower side beam 350 is inclined to facilitate the connection between the fixing part 370 and the door sill beam 100. At the same time, the thickness of the wall of the connection between the fixing part 370 and the lower side beam 350 is greater than the thickness of the wall at other positions, thereby enhancing the connection strength between the lower side beam 350 and the fixing part 370.

As shown in FIG. 1 and FIG. 3, the door sill beam 100 is connected to the fixing part 370 by a fastener 800. In this embodiment, the fastener 800 is a bolt. In order to prevent the bolt from protruding from the fixing part 370, the fixing part 370 is recessed in the Z direction to form a sink 371. The Z direction is the vertical direction of the base plate 310, that is, the Z direction of the vehicle. The bolt passes through from bottom to top to connect the fixing part 370 with the door sill beam 100. After fixing, the head of the bolt is provided in the sink 371 to avoid protruding from the bottom surface of the fixing part 370.

For the stability of the structure, the side beam 320 is formed by the integral extrusion process. That is, the side beam part 330, the fixing part 370 and the connecting part 360 are provided in one piece. In order to reduce weight and ensure lightweight, the side beam 320 can be formed by an integrated alloy extrusion process.

When in use, the cell module 400 is placed into the battery frame 300 from the opening of the battery frame 300, and the cell module 400 is fixed in the battery frame 300. The polyurethane is provided between the cell module 400 and the side beam of the battery frame 300. The battery cover 700 is covered on the opening of the battery frame 300, and the battery cover 700 is fixed in the opening of the battery frame 300. The assembled power battery 200 as a whole is installed under the floor of the vehicle. The fixing parts 370 of the side beams 320 on both sides of the battery frame 300 are connected and fixed to the door sill beam 100 by bolts. The scratch protection plate 600 is fixed to the mounting position 352 of the lower side beam 350 by bolts. The scratch protection plate 600 can also be installed on the battery frame 300 first. The bolts of the door sill beam 100 and the bolts of the scratch protection plate 600 will not protrude, ensuring the aesthetics.

As shown in FIG. 4 and FIG. 5, when the vehicle is in a side collision, the collision force first hits the door sill beam 100. During the collision, the plurality of cavities of the door sill beam 100 will collapse and deform to absorb part of the energy. Part of the remaining energy is transferred to other areas of the vehicle body through the transverse seat crossbeam of the floor of the vehicle body. Another part of the remaining energy is transferred to the side beam part 330 through the fixing part 370. The side beam part 330 is induced to bend at the mounting position 352 of the anti-scratch guard plate 600. After the deformation, the side beam part 330 will be squeezed and deformed obliquely upward, increasing the force-bearing area of the side beam part 330 and the polyurethane material, reducing the impact on the cooling assembly 420 and the battery cell group 410. At the same time, the excess energy is transferred to the base plate 310 of the battery frame 300 through the connecting part 360 of the battery frame 300, and then transferred to the side beam 320 on another side of the battery frame 300 through the base plate 310, and then transferred to the vehicle body structure.

The above contents are only some embodiments of the present application, and do not limit the scope of the present application. All equivalent structural changes made by using the contents of the present application specification and drawings under the inventive concept of the present application, or directly/indirectly applied in other related technical fields are included in the scope of the present application.

## Claims

1. A battery frame, **characterized by** comprising:
a base plate; and
side beams, wherein:
the side beams are provided on opposite sides of the base plate, each side beam comprises a side beam part extending along a height direction of the base plate, a connecting part provided inside the side beam part and connected to the base plate, and a fixing part provided outside the side beam part and connected to a door sill beam of a vehicle; and
the side beam part comprises an upper side beam and a lower side beam, the upper side beam is provided above the lower side beam, an outer side of the lower side beam is connected to the fixing part, an inner side of the lower side beam is connected to the connecting part, a first cavity is provided at the lower side beam, and a thickness of a bottom wall of the first cavity is less than a thickness of a side wall of the first cavity.

2. The battery frame according to claim 1, further comprising:
a scratch protection plate,
wherein the bottom wall of the first cavity is provided with a mounting position, and the scratch protection plate is detachably fixed to the mounting position.

3. The battery frame according to claim 2, wherein the scratch protection plate is fixed to the mounting position by a fastener, the mounting position forms a groove along a penetration direction of the fastener, and a head of the fastener is placed in the groove.

4. The battery frame according to claim 1, wherein the connecting part is provided with a second cavity.

5. The battery frame according to claim 4, wherein a thickness of a wall of the second cavity is greater than or equal to the thickness of the side wall of the first cavity.

6. The battery frame according to any one of claims 1 to 5, wherein a third cavity is provided on the upper side beam, and a reinforcement structure is provided in the third cavity.

7. The battery frame according to claim 6, wherein the reinforcement structure comprises a plurality of reinforcement ribs distributed inside the third cavity, the plurality of reinforcement ribs are obliquely provided between two side walls of the third cavity, and the third cavity is divided into a plurality of sub-cavities.

8. The battery frame according to claim 7, wherein a thickness of a side wall of the third cavity is less than the thickness of the side wall of the first cavity.

9. The battery frame according to claim 1, wherein a connection between the fixing part and the lower side beam is inclined.

10. The battery frame according to claim 9, wherein the fixing part comprises a sink formed by a bottom depression, a fastener passes through the fixing part and is fixed to the door sill beam of the vehicle, and a head of the fastener is provided in the sink.

11. The battery frame according to claim 1, wherein the side beam is formed by an integral extrusion process.

12. A power battery, **characterized by** comprising:
a cell module; and
the battery frame according to any one of claims 1 to 11,
wherein the battery frame is configured to install the cell module.

13. The power battery according to claim 12, further comprising:
a protective layer provided between the cell module and the battery frame.

14. A vehicle, **characterized by** comprising:
a vehicle body; and
the power battery according to claim 12 or 13,
wherein the two fixing parts are respectively connected to a door sill beam of the vehicle body, and a cavity structure is provided in the door sill beam.

15. The vehicle according to claim 14, wherein the door sill beam is formed by an integral extrusion process.
